# EUROPEAN PATENT APPLICATION

(11) **EP 2 301 905 A1**
(43) Date of publication of application: **30.03.2011**
(21) Application number: 09171544.1
(22) Date of filing: 28.09.2009
(51) Int. Cl.: C04B 35/573, C04B 38/00

(54) **Porous ceramic preparation method**

(71) Applicant: ABC Taiwan Electronics Corp., Taoyuan-Hsien 32627 (TW)
(72) Inventor: Wang, Chou-Mo, 32627, Taoyuan Hsien (TW)
(74) Representative: Lang, Christian

(57) **Abstract**

A porous ceramic member preparation method includes the step of mixing powdered silicon carbide and a resin at a predetermined ratio with a solvent to form a paste for enabling the resin to be covered on the surface of the powdered silicon carbide and the solvent to be fully vaporized, the step of processing the paste into a predetermined shape, the step of heating the shaped material at a low heating temperature to cure the resin, and the step of sintering the shaped material into a ceramic member having pores therein.

## Description

### BACKGROUND OF THE INVENTION

### 1. Field of the Invention:

The present invention relates to preparation of ceramic materials and more particularly, to a porous ceramic preparation method, which is practical for making a porous ceramic member having evenly distributed pores therein for heat dissipation application.

### 2. Description of the Related Art:

Following fast development of electronic technology, small-sized electronic devices are created and widely used for different applications. During operation of a high-speed electronic device, much waste heat is produced. This waste heat must be quickly carried away, avoiding electronic ionization and thermal stress. Accumulation of waste heat may cause operation instability and will shorten the working life of the electronic device. Copper and aluminum alloy are commonly used for making heat sinks for heat dissipation. Nowadays, powdered silicon carbide (SiC) is intensively used and sintered into porous ceramics for heat dissipation application. Sintering powdered silicon carbide (SiC) into porous ceramics for heat dissipation application has drawbacks as follows:
1. Sintering powdered silicon carbide (SiC) into porous ceramics by means of utilization of property of low coefficient of molecular diffusion of powdered silicon carbide (SiC) cannot control formation of pores in the sintered ceramic material accurately. The porous ceramic member thus obtained may have a low performance when used for heat dissipation.
2. Before sintering, powdered silicon carbide (SiC) must be mixed with water and a certain amount of bonding agent into a paste-like mixture. After vaporization of water content, the mixture is squeezed into a predetermined shape, and then sintered in a sintering furnace. However, silicon carbide (SiC) has a high hardness. When squeezing the mixture into a predetermined shape, the mold of the shape-forming machine is kept in direct contact with silicon carbide (SiC). Therefore, a high level of pressure is necessary to squeeze the mixture into a predetermined shape. Further, because of direction contact between the mold and silicon carbide (SiC), the mold wears quickly with use.

### SUMMARY OF THE INVENTION

The present invention has been accomplished under the circumstances in view. It is one object of the present invention to provide a porous ceramic member preparation method, which utilizes a resin to cover the surface of powdered silicon carbide so that the resin can be completely burned out to form pores when the prepared material is sintered into a ceramic member.

It is another object of the present invention to provide a porous ceramic member preparation method, which utilizes a bonding medium to bond powdered silicon carbide for sintering into a porous ceramic member, thereby saving energy consumption and lowering porous ceramic member manufacturing cost.

It is still another object of the present invention to provide a porous ceramic member preparation method, which utilizes a resin to cover the surface of powdered silicon carbide so that the prepared material can be squeezed into a predetermined shape with a relatively lower pressure, avoiding quick wear of the mold.

It is still another object of the present invention to provide a porous ceramic member preparation method, which enables the resin powdered silicon carbide mixture to be processed into grains and screened through a screener so that grains having approximately one equal size are selected and squeezed in a mold of a shape-forming machine into a predetermined shape for further sintering, assuring even distribution of pores in the finished ceramic member.

To achieve these and other objects of the present invention, a porous ceramic member preparation method includes the steps of:
1. Mixing, where powdered silicon carbide and a bonding medium are mixed with a resin and a solvent, for enabling the resin to be covered on the surface of the powdered silicon carbide;
2. Solvent vaporization, where the prepared powdered silicon carbide, bonding medium and resin are well mixed and the solvent is completely changed into vapor;
3. Granulation, where the mixture is processed into grains and grains having approximately one equal size are selected by means of a screener;
4. Shape forming, where the selected grains are put in a mold of a shape-forming machine and squeezed into a predetermined shape;
5. Curing, where the shaped material is heated and cured; and
6. Sintering, where the cured shaped material is sintered at a temperature about equal to the melting point of the bonding medium, causing the resin to be completely burned out so that pores are evenly distributed in the sintered ceramic member.

### DETAILED DESCRIPTION OF THE PREFERRED EMBODIMENT

A porous ceramic member in accordance with the present invention uses silicon carbide (SiC) as a base material. During preparation, silicon carbide (SiC) powder and a resin, preferably, thermosetting resin, are prepared at a predetermined ratio and well mixed with a solvent, for example, ketone. At this time, the resin is solved by ketone into a fluid that covers the surface of powdered silicon carbide (SiC). Continuously mix the mixture until fully vaporization of the solvent, thereby obtaining a paste. The paste thus obtained is processed into grains that are then screened through a screener so that grains are selected subject a predetermined grain size. The selected grains are then put in a mold of a shape-forming machine and squeezed into a predetermined shape. The shaped material thus obtained is treated through a low-temperature heating process at a temperature about 180°C, and cured. The shaped material that has been cured is then sintered at a temperature about the melting point of silicon carbide (SiC) (about 2000°C ∼2600°C), causing the cured resin to be completely burned out, and therefore pores are formed in the sintered ceramic member at locations corresponding to the distribution of the resin.

Because silicon carbide (SiC) has a high melting point, the porous ceramic member thus obtained has better heat-resistant property. For a relatively lower temperature resisting application, a bonding medium having a melting point lower than silicon carbide (SiC) can be added to powdered silicon carbide (SiC) and the cured material can then be sintered at a temperature about the melting point of the bonding medium, saving energy consumption and lowering the manufacturing cost of the desired porous ceramic member. The bonding medium can be oxide silicone based meltings having a melting point about 1000°C.

When a bonding medium is used, powdered silicon carbide (SiC) and the prepared bonding medium are mixed at a predetermined ratio, and then a resin, for example, thermosetting resin is prepared and mixed with the mixture of powdered silicon carbide (SiC) and the bonding medium. Preferably, powdered silicon carbide (SiC), the bonding medium and the resin are prepared at the ratio of 8:1:1 and mixed with a solvent, for example, ketone. The resin is solved by ketone into a fluid that covers the surface of powdered silicon carbide (SiC) and the bonding medium. Continuously mix the mixture until fully vaporization of the solvent, thereby obtaining a paste. The paste thus obtained is processed into grains that are then screened through a screener subject a predetermined grain size. The selected grains are then put in a mold of a shape-forming machine and squeezed into a predetermined shape. The shaped material thus obtained is treated through a low-temperature heating process at a temperature about 180°C and cured. The shaped material that has been cured is then sintered at a temperature about the melting point of the bonding medium, causing the bonding medium to be melted to bond silicon carbide (SiC) and the cured resin to be completely burned out, and therefore pores are formed in the sintered ceramic member at locations corresponding to the distribution of the resin.

Based on the above disclosure, the invention has advantages and features as follows:
**1.** By means of using a resin to cover the surface of silicon carbide (SiC) and oxide silicone based meltings, the mold is kept in contact with the resin directly without touching silicon carbide (SiC) during the shape forming process. Further, the resin has a hardness much lower than silicon carbide (SiC). Therefore, the grains can be squeezed into the desired shape with a relatively lower pressure. Because the mold does not touch the relatively harder silicon carbide (SiC), it will not wear quickly with use.
2. The invention has the cured resin to be burned out completely so that pores are formed in the in the sintered ceramic member at locations corresponding to the distribution of the resin. By means of adjusting the ratio of the added resin, the size and distribution area of the pores in the finished product are relatively controlled. Therefore, the invention facilitates preparation of the desired porous ceramic member for thermal transfer and heat dissipation applications.
3. The invention utilizes a bonding medium to bond silicon carbide (SiC) powder. Because the bonding medium has a melting point lower than silicon carbide (SiC), the sintering temperature can be relatively lowered, saving energy consumption and lowering the manufacturing cost of the desired porous ceramic member. Further, the bonding medium is selected subject to requirements. For example, for making a bearing, a bonding medium having a relatively higher melting point is selected. On the contrary, for heat dissipation application, a bonding medium having a relatively lower melting point is selected.
4. The invention utilizes a resin to cover the surface of powdered silicon carbide (SiC). Further, after the prepared paste has been processed into grains, they are screened through a screener subject a predetermined grain size. The selected grains are approximately equal in size. Therefore, the finished ceramic member has pores of approximately equal size evenly distributed therein, assuring high performance in thermal transfer.

Although a particular embodiment of the invention has been described in detail for purposes of illustration, various modifications and enhancements may be made without departing from the spirit and scope of the invention. Accordingly, the invention is not to be limited except as by the appended claims.

## Claims

1. A porous ceramic member preparation method, comprising the steps of:
a) preparing powdered silicon carbide and a resin and then mixing said powdered silicon carbide and said resin at a predetermined ratio with a solvent to form a paste for enabling said resin to be covered on the surface of said powdered silicon carbide and said solvent to be fully vaporized;
b) processing said paste into a predetermined shape;
c) curing the shaped material thus obtained at a low heating temperature; and
d) sintering the cured shaped material into a ceramic member having pores therein.

2. The porous ceramic member preparation method as claimed in claim 1**,** wherein the step b) processing said paste into a predetermined shape comprises a first sub-step of processing said paste into grains, a second sub-step of screening the grains through a screener to select grains subject a predetermined grain size, and a third sub-step of putting the screen-selected grains in a mold of a shape-forming machine and squeezing the screen-selected gains into a predetermined shape.

3. A porous ceramic member preparation method, comprising the steps of:
a) preparing powdered silicon carbide, a resin and a bonding medium having a melting point lower than said powdered silicon carbide and higher than said resin at a predetermined ratio and then mixing said powdered silicon carbide and said resin and said bonding medium with a solvent to form a paste for enabling said resin to be covered on the surface of said powdered silicon carbide and said bonding medium and said solvent to be fully vaporized;
b) processing said paste into a predetermined shape;
c) curing the shaped material thus obtained at a low heating temperature; and
d) sintering the cured shaped material into a ceramic member having pores therein.

4. The porous ceramic member preparation method as claimed in claim 3, wherein the step b) processing said paste into a predetermined shape comprises a first sub-step of processing said paste into grains, a second sub-step of screening the grains through a screener to select grains subject to a predetermined grain size, and a third sub-step of putting the screen-selected grains in a mold of a shape-forming machine and squeezing the screen-selected gains into a predetermined shape.

5. The porous ceramic member preparation method as claimed in claim 3, wherein bonding medium is selected from oxide silicone based meltings.
